# EUROPEAN PATENT APPLICATION

(11) **EP 4 618 364 A1**
(43) Date of publication of application: **17.09.2025**
(21) Application number: 24214943.3
(22) Date of filing: 22.11.2024
(51) Int. Cl.: H02J 7/00, H01M 10/44, H01M 10/42

(54) **BATTERY PACK**

(30) Priority: 13.03.2024 KR 20240035361
(71) Applicant: SAMSUNG SDI CO., LTD., Yongin-si, Gyeonggi-do 17084 (KR)
(72) Inventor: KIM, Sukki, 17084 Yongin-si (KR); OKUI, Yoshiaki, 17084 Yongin-si (KR); CHOI, Sunho, 17084 Yongin-si (KR); CHOI, Taeseong, 17084 Yongin-si (KR)
(74) Representative: Marks & Clerk LLP

(57) **Abstract**

A battery pack includes a first battery rack, a first power conversion circuit, a second battery rack, and a battery controller. The first battery rack is connected between a first pack terminal and a second pack terminal of the battery pack. The first power conversion circuit includes a first terminal, a second terminal, a third terminal, and a fourth terminal that is connected to the second pack terminal, and the first power conversion circuit is configured to bidirectionally convert a first conversion voltage between the first terminal and the second terminal into a second conversion voltage between the third terminal and the fourth terminal. The second battery rack is connected between the first pack terminal and the third terminal of the first power conversion circuit. The battery controller is configured to control the first power conversion circuit to adjust a level of the second conversion voltage.

## Description

### BACKGROUND

### 1. Field

One or more embodiments relate to a battery pack, and more particularly, to a battery pack in which a plurality of battery racks are connected in parallel to each other using a power conversion circuit.

### 2. Description of the Related Art

Secondary batteries are rechargeable unlike non-rechargeable primary batteries. Small secondary batteries are used in small, portable electronic devices such as smartphones, feature phones, laptop computers, digital cameras, and camcorders, while large secondary batteries are widely used in hybrid vehicles, electric vehicles, and energy storage systems. In general, large batteries are made up of battery cells, battery modules, battery racks, and battery packs.

Battery cells are basic units of secondary batteries and each include: an electrode assembly formed by a positive electrode, a separator, and a negative electrode; electrode terminals respectively connected to the positive electrode and the negative electrode; and a case in which the electrode assembly and electrolyte are contained. Battery modules are each an assembly in which a predetermined number of battery cells are combined with each other and put into a frame to increase battery output power and protect the battery cells from external shock, heat, and vibration. Battery racks are each used to connect a plurality of battery modules to each other and are each finally provided by adding a battery management system thereto for thermal management and electrical control. Such a battery management system may include a microcontroller unit (MCU), an analog front end (AFE), a protection device, and a sensor. Battery packs may each include battery racks connected in parallel to each other and a controller configured to communicate with battery management systems of the battery racks for managing and controlling the overall operation of the battery pack.

After a battery pack is used for a long period of time, old battery racks of the battery pack may be replaced with new battery racks, new battery racks may be additionally added to the battery pack, some battery modules may be replaced with new battery modules, or new battery modules may be additionally added to the battery pack. In this case, new battery racks and existing old battery racks may be connected in parallel to each other, which may cause an impedance imbalance issue. For example, if an old battery rack is completely discharged, although energy remains in a new battery rack, energy stored in battery modules of the new battery rack may not be used.

To address this, old battery racks are connected in parallel to a power conversion circuit and are used together with new battery racks. In this case, however, a power conversion circuit having a capacity large enough to handle battery racks is required, and thus, various issues such as an increase in financial burden, power consumption due to power conversion efficiency, heating, or space constraints may arise.

This information about the related art is only for facilitating understanding of the background of the present disclosure and may thus include information that does not constitute the related art.

### SUMMARY

One or more embodiments include a battery pack in which a plurality of battery racks may be connected in parallel to each other using a low-capacity power conversion circuit.

However, the present disclosure is not limited thereto and will be apparently understood by those skilled in the art through the following description.

Additional aspects will be set forth in part in the description which follows and, in part, will be apparent from the description, or may be learned by practice of the presented embodiments of the present disclosure.

According to one or more embodiments, a battery pack includes a first battery rack, a first power conversion circuit, a second battery rack, and a battery controller. The first battery rack is connected between a first pack terminal and a second pack terminal of the battery pack. The first power conversion circuit includes a first terminal, a second terminal, a third terminal, and a fourth terminal that is connected to the second pack terminal. The first power conversion circuit is configured to bidirectionally convert a first conversion voltage between the first terminal and the second terminal into a second conversion voltage between the third terminal and the fourth terminal. The second battery rack is connected between the first pack terminal and the third terminal of the first power conversion circuit. The battery controller is configured to control the first power conversion circuit to adjust a level of the second conversion voltage.

In some embodiments, the second battery rack may be connected between the first terminal and the second terminal of the first power conversion circuit. The first terminal of the first power conversion circuit may be connected to the first pack terminal. The second terminal and the third terminal of the first power conversion circuit may be connected to each other.

In other embodiments, the first power conversion circuit may further include a first switch between the first terminal and a first intermediate node of the first power conversion circuit, a second switch between the first intermediate node and the fourth terminal, and an inductor between the first intermediate node and a second intermediate node of the first power conversion circuit that is commonly connected to the second terminal and the third terminal of the first power conversion circuit.

In other embodiments, the first power conversion circuit may further include an additive-polarity transformer including a primary coil connected between the first terminal and the second terminal and a secondary coil connected between the third terminal and the fourth terminal, a first switch connected in series to the primary coil between the first terminal and the second terminal, and a second switch connected in series to the secondary coil between the third terminal and the fourth terminal.

In other embodiments, the first battery rack may be connected between the first terminal and the second terminal of the first power conversion circuit. The first terminal of the first power conversion circuit may be connected to the first pack terminal. The second terminal and the fourth terminal of the first power conversion circuit may be commonly connected to the second pack terminal.

In other embodiments, the first power conversion circuit may further include a first switch between the first terminal and a first intermediate node of the first power conversion circuit, an inductor between the first intermediate node and the third terminal, and a second switch between the first intermediate node and a second intermediate node that is commonly connected to the second terminal and the fourth terminal.

In other embodiments, the battery pack may further include a battery module and a second power conversion circuit. The battery module may be connected between the first terminal and the second terminal of the first power conversion circuit. The second power conversion circuit may include a fifth terminal connected to the first pack terminal, a sixth terminal connected to the second pack terminal, a seventh terminal, and an eighth terminal. The second power conversion circuit may be configured to bidirectionally convert a first battery voltage of the first battery rack connected between the fifth terminal and the sixth terminal into a third battery voltage of the battery module connected between the seventh terminal and the eighth terminal.

In other embodiments, the first power conversion circuit may further include a first switch between the first terminal and a first intermediate node, a second switch between the first intermediate node and the fourth terminal, and an inductor between the first intermediate node and a second intermediate node that is commonly connected to the second terminal and the third terminal.

In other embodiments, the second power conversion circuit may further include an additive-polarity transformer including a primary coil connected between the fifth terminal and the sixth terminal and a secondary coil connected between the seventh terminal and the eighth terminal, a third switch connected in series to the primary coil between the fifth terminal and the sixth terminal, and a fourth switch connected in series to the secondary coil between the seventh terminal and the eighth terminal.

In other embodiments, the first power conversion circuit may further include an inductor between the first terminal and a first intermediate node, a first switch between the first intermediate node and the third terminal, and a second switch between the first intermediate node and a second intermediate node that is commonly connected to the second terminal and the fourth terminal.

In other embodiments, the second power conversion circuit may further include an additive-polarity transformer including a primary coil connected between the fifth terminal and the sixth terminal and a secondary coil connected between the seventh terminal and the eighth terminal, a third switch connected in series to the primary coil between the fifth terminal and the sixth terminal, and a diode connected in reverse bias in series to the secondary coil between the seventh terminal and the eighth terminal.

In other embodiments, the battery controller may be further configured to detect a third state of charge of the battery module and control the second power conversion circuit based on the third state of charge.

In other embodiments, the battery controller may be further configured to detect a first state of charge of the first battery rack and a second state of charge of the second battery rack and adjust the level of the second conversion voltage based on a difference between the first state of charge and the second state of charge.

In other embodiments, the battery controller may be further configured to, if the second state of charge is less than the first state of charge in a charge mode, decrease a level of the second conversion voltage to increase a charge current of the second battery rack. The battery controller may be further configured to, if the second state of charge is less than the first state of charge in a discharge mode, decrease the level of the second conversion voltage to decrease a discharge current of the second battery rack.

In other embodiments, the battery controller may be further configured to detect a first battery current capacity of the first battery rack and a second battery current capacity of the second battery rack, detect a first battery current flowing through the first battery rack and a second battery current flowing through the second battery rack, and adjust a level of the second conversion voltage such that a ratio of the second battery current to the first battery current may be equal to a ratio of the second battery current capacity to the first battery current capacity.

According to one or more embodiments, a battery pack includes a first battery rack, a first power conversion circuit, a second battery rack, and a battery controller. The first battery rack is connected between a first pack terminal and a second pack terminal and has a first battery voltage. The first power conversion circuit includes a first terminal, a second terminal, a third terminal, a fourth terminal, and a capacitor between, e.g. disposed between, the third terminal and the fourth terminal. The first power conversion circuit is configured to bidirectionally convert a first conversion voltage between the first terminal and the second terminal into a second conversion voltage between both ends of the capacitor. The second battery rack is connected between the first pack terminal and the third terminal of the first power conversion circuit and has a second battery voltage. The battery controller is configured to control the first power conversion circuit to adjust a level of the second conversion voltage of the first power conversion circuit. The second battery rack and the capacitor of the first power conversion circuit are connected in series to each other between the first pack terminal and the second pack terminal.

In some embodiments, the second battery rack may be connected between the first terminal and the second terminal of the first power conversion circuit.

In other embodiments, the first battery rack may be connected between the first terminal and the second terminal of the first power conversion circuit.

In other embodiments, the battery pack may further include a battery module and a second power conversion circuit. The battery module may be connected between the first terminal and the second terminal of the first power conversion circuit and may have a third battery voltage. The second power conversion circuit may include a fifth terminal connected to the first pack terminal, a sixth terminal connected to the second pack terminal, a seventh terminal connected to the first terminal, and an eighth terminal connected to the second terminal. The second power conversion circuit may be configured to bidirectionally convert the first battery voltage between the fifth terminal and the sixth terminal into the third battery voltage between the seventh terminal and the eighth terminal.

In other embodiments, the battery controller may be further configured to detect a first battery current flowing through the first battery rack and a second battery current flowing through the second battery rack and adjust a level of the second conversion voltage based on a ratio of the second battery current to the first battery current and a ratio of a second battery capacity of the second battery rack to a first battery capacity of the first battery rack.

At least some of the above and other features of the invention are set out in the claims.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a battery pack according to embodiments of the present disclosure;
FIG. 2 is a circuit diagram illustrating an example of the battery pack shown in FIG. 1;
FIG. 3 is a circuit diagram illustrating another example of the battery pack shown in FIG. 1;
FIG. 4 is a block diagram illustrating a battery pack according to other embodiments of the present disclosure;
FIG. 5 is a circuit diagram illustrating an example of the battery pack shown in FIG. 4;
FIG. 6 is a block diagram illustrating a battery pack according to other embodiments of the present disclosure;
FIG. 7 is a circuit diagram illustrating an example of the battery pack shown in FIG. 6; and
FIG. 8 is a circuit diagram illustrating another example of the battery pack shown in FIG. 6.

### DETAILED DESCRIPTION OF THE DRAWINGS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, embodiments of the present disclosure will be described. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. For example, the constitution of the embodiments and drawings presented herein is just a preferable example for the purpose of illustrations only, not intended to limit the scope of the present disclosure, so it should be understood that other equivalents and modifications could be made thereto without departing from the scope of the present disclosure.

The meaning of "comprise," "include," "comprising," and/or "including " specifies a shape, a number, a step, an operation, a member, an element, and/or a combination thereof, but does not exclude other shapes, numbers, steps, operations, members, elements, and/or combinations thereof. In the descriptions of embodiments, phrases such as "can," "may," or "able to" may be used to indicate one or more embodiments.

To aid in the understanding of the present disclosure, the accompanying drawings may not be drawn to actual scale and may exaggerate certain dimensions of elements. For example, identical reference numerals may be assigned to the same elements in different embodiments.

The statement that two objects are "the same" may mean that the two objects are "substantially the same." The expression "substantially the same" may include variations that are considered minor in the relevant industry, such as deviations of 5 % or less. The statement that a parameter is uniform in a certain range may mean that the parameter is uniform from an average perspective.

It will be understood that although terms such as "first" and "second" are used herein to describe various elements, these elements should not be limited by these terms. These terms are only used to distinguish one element from other elements. Unless otherwise stated, a first element may be referred to as a second element, and vice versa.

Throughout the specification, unless otherwise stated, the number of each element may be one or more.

If an element is referred to as being "above (or below)" or "on" another element, it may be directly on the upper surface (lower surface) of the other element while making contact with the other element or may be above (below) the other element with intervening elements being therebetween.

For example, "connection," "coupling," or "access" between elements may refer to direct connection, coupling, or access, or may refer to indirect connection, coupling, or access with other elements being therebetween or involved. For example, if a portion or element is referred to as being electrical coupled to another portion or element, the portion or element may be directly connected to the other portion or element, or may be connected to the other portion or element with intervening portions or elements being therebetween.

In the specification, the expression "A and/or B" indicates A, B, or A and B unless otherwise stated. For example, the expression "and/or" may include any and all combinations of one or more of the associated items. The range of "C to D" indicates a range greater than or equal to C and less than or equal to D unless otherwise stated.

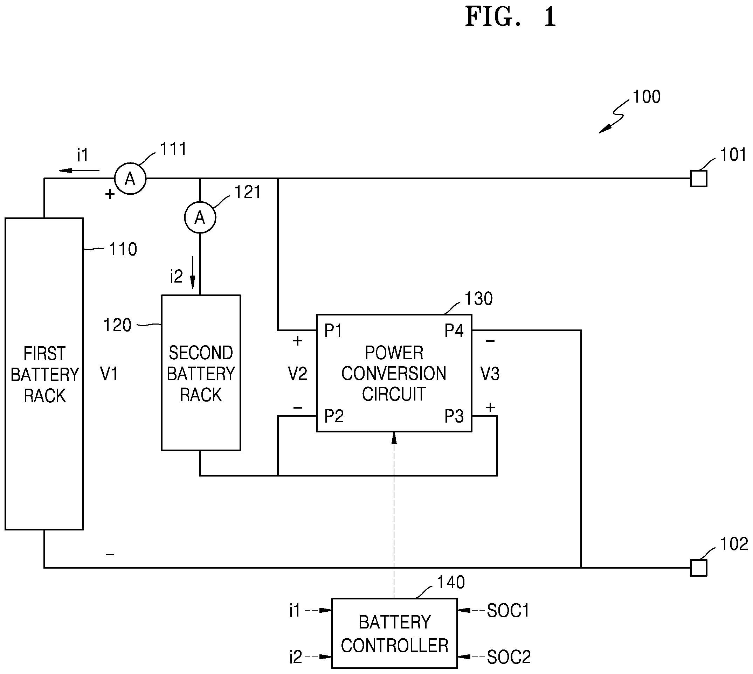

FIG. 1 is a block diagram illustrating a battery pack 100 according to embodiments of the present disclosure.

Referring to FIG. 1, the battery pack 100 may include a first pack terminal 101, a second pack terminal 102, a first battery rack 110, a second battery rack 120, a power conversion circuit 130, and a battery controller 140. The first battery rack 110 may be connected between the first and second pack terminals 101, 102. The power conversion circuit 130 may have a first terminal P1, a second terminal P2, a third terminal P3, and a fourth terminal P4. The fourth terminal P4 of the power conversion circuit 130 may be connected to the second pack terminal 102. The power conversion circuit 130 may bidirectionally convert a first conversion voltage V2 between the first and second terminals P1, P2 into a second conversion voltage V3 between the third and fourth terminals P3, P4. The second battery rack 120 may be connected between the first pack terminal 101 and the third terminal P3 of the power conversion circuit 130. The battery controller 140 may control the power conversion circuit 130 to adjust the level of the second conversion voltage V3.

The first and second pack terminals 101, 102 may be connected to a charging device configured to charge the battery pack 100 or to an electrical load that is to receive power from the battery pack 100. A voltage between the first pack terminal 101 and the second pack terminal 102 may be referred to as a pack voltage, and it may be assumed that the first pack terminal 101 has a higher potential than the second pack terminal 102.

The first battery rack 110 may include a plurality of first battery modules connected in series to each other. The first battery rack 110 may include, for example, twelve or sixteen first battery modules connected in series to each other. For example, the first battery modules may each have a battery capacity of 7.6 kWh and a module voltage of about 68.2 V to about 91.3 V depending on the state of charge thereof. A voltage between positive and negative terminals of the first battery rack 110 may be referred to as a first battery voltage or a first rack voltage V1.

Each of the first battery modules may include a plurality of first battery cells. For example, each of the first battery modules may include twenty-two first battery cells connected in series to each other, each having a cell capacity of 94 Ah. The first battery cells may be portions that store power and may be rechargeable secondary battery cells. For example, the first battery cells may each include at least one member selected from the group consisting of lithium ion battery cells, lithium polymer battery cells, nickel cadmium battery cells, nickel metal hydride (Ni-MH) battery cells, nickel zinc (Ni-Zn) battery cells, and lead-acid battery cells.

Each of the first battery modules may include a first module management unit configured to manage the first battery cells. The first battery rack 110 may further include a first rack management unit communicatively connected to the first module management units of the first battery modules.

The number of first battery modules of the first battery rack 110 and the connection relationship between the first battery modules do not limit the scope of the present disclosure. The number of first battery cells of each of the first battery modules and the connection relationship between the first battery cells also do not limit the scope of the present disclosure.

The second battery rack 120 may include a plurality of second battery modules connected in series to each other. The second battery rack 120 may include, for example, four, six, or eight second battery modules connected in series to each other. For example, the second battery modules may each have a battery capacity of 24.3 kWh and a module voltage of about 68.2 V to about 91.3 V depending on the state of charge thereof. A voltage between positive and negative terminals of the second battery rack 120 may be referred to as a second battery voltage V2 or a second rack voltage V2.

Each of the second battery modules may include a plurality of second battery cells. For example, each of the second battery modules may include forty-four battery cells that are connected in series and parallel to each other, each having a cell capacity of 150 Ah. For example, two battery string sets each including twenty-two second battery cells connected in series to each other may be connected in parallel to each other to form a second battery module. The second battery cells may be portions that store power and may be rechargeable secondary battery cells. For example, the second battery cells may each include at least one member selected from the group consisting of lithium ion battery cells, lithium polymer battery cells, nickel cadmium battery cells, Ni-MH battery cells, Ni-Zn battery cells, and lead-acid battery cells.

Each of the second battery modules may include a second module management unit configured to manage the second battery cells. The second battery rack 120 may further include a second rack management unit communicatively connected to the second module management units.

The number of second battery modules of the second battery rack 120, the connection relationship between the second battery modules, the number of second battery cells of each of the second battery modules, and the connection relationship between the second battery cells do not limit the scope of the present disclosure.

The first battery rack 110 and the second battery rack 120 may have different configurations. The first battery rack 110 and the second battery rack 120 may have different numbers of battery modules and different connection relationships between the battery modules. For example, the first battery rack 110 may include twelve battery modules, and the second battery rack 120 may include four battery modules. The first battery rack 110 and the second battery rack 120 may include battery modules that have different numbers of battery cells and different connection relationships between the battery cells. For example, each battery module of the first battery rack 110 may include battery cells having a cell capacity of 94 Ah, and each battery module of the second battery rack 120 may include battery cells having a cell capacity of 150 Ah. Even if the first battery rack 110 and the second battery rack 120 include the same battery cells, the battery cells may have different states of health. For example, the first battery rack 110 may include first, new, battery cells, and the second battery rack 120 may include second, aged, battery cells.

The first battery rack 110 may be connected between the first and second pack terminals 101, 102. The positive terminal of the first battery rack 110 may be substantially directly connected to the first pack terminal 101, and the negative terminal of the first battery rack 110 may be substantially directly connected to the second pack terminal 102. A contactor or a circuit breaker may be disposed between the positive terminal of the first battery rack 110 and the first pack terminal 101, and/or a contactor or a circuit breaker may be disposed between the negative terminal of the first battery rack 110 and the second pack terminal 102.

The battery pack 100 may further include a first current sensor 111 configured to detect a first battery current i1 flowing through the first battery rack 110. The battery pack 100 may further include a second current sensor 121 configured to detect a second battery current i2 flowing through the second battery rack 120. The battery controller 140 may detect the first battery current i1 flowing through the first battery rack 110 by using the first current sensor 111 and the second battery current i2 flowing through the second battery rack 120 by using the second current sensor 121.

In another example, the first current sensor 111 may be included in the first battery rack 110. The first rack management unit of the first battery rack 110 may detect the first battery current i1 flowing through the first battery rack 110 by using the first current sensor 111 and may provide the magnitude of the first battery current i1 to the battery controller 140.

The second current sensor 121 may be included in the second battery rack 120. The second rack management unit of the second battery rack 120 may detect the second battery current i2 of the second battery rack 120 and may provide the magnitude of the second battery current i2 to the battery controller 140. The first rack management unit of the first battery rack 110, the second rack management unit of the second battery rack 120, and the battery controller 140 may exchange data through communication.

In another example, a total pack current flowing in the battery pack 100 may be detected through the first and second pack terminals 101, 102. A main current sensor may be disposed in a high-current path between the first and second pack terminals 101, 102. The battery controller 140 may also detect a pack current using the main current sensor. In another example, the first and second pack terminals 101, 102 may be connected to an integrated controller such as a power conversion device, and the integrated controller may detect a pack current of the battery pack 100 and provide the magnitude of the pack current to the battery controller 140. The battery controller 140 may calculate or predict the magnitude of the first battery current i1 based on a result of subtracting the magnitude of the second battery current i2 from the magnitude of the pack current.

The power conversion circuit 130 may be a bidirectional DC/DC converter including the first to fourth terminals P1, P2, P3, and P4. The power conversion circuit 130 may convert the first conversion voltage V2 (that is, the second battery voltage V2) between the first and second terminals P1, P2 into the second conversion voltage V3 and may output the second conversion voltage V3 between the third and fourth terminals P3, P4. The power conversion circuit 130 may convert the second conversion voltage V3 between the third and fourth terminals P3, P4 into the first conversion voltage V2 and may output the first conversion voltage V2 between the first and second terminals P1, P2.

The first terminal P1 and the second terminal P2 may be connected to the second battery rack 120 and may receive the second battery voltage V2 of the second battery rack 120. The first conversion voltage V2 between the first and second terminals P1, P2 may be substantially the same as the second battery voltage V2 of the second battery rack 120. The first terminal P1 may be connected to the first pack terminal 101, and the fourth terminal P4 may be connected to the second pack terminal 102. The second terminal P2 and the third terminal P3 may be connected to each other.

For example, as shown in FIG. 1, the second battery rack 120 and the third and fourth terminals P3, P4 of the power conversion circuit 130 may be connected in series to each other between the first and second pack terminals 101, 102, and the first battery voltage V1 of the first battery rack 110 may be substantially the same as the sum of the second battery voltage V2 of the second battery rack 120 and the second conversion voltage V3.

The power conversion circuit 130 may be controlled by the battery controller 140. The battery controller 140 may adjust the level of the second conversion voltage V3 based on the second battery current i2. For example, the battery controller 140 may adjust the level of the second conversion voltage V3 such that the ratio of the first battery current i1 and the second battery current i2 may be equal to a ratio set value. For example, the ratio set value may be set according to the ratio of a first battery current capacity of the first battery rack 110 and a second battery current capacity of the second battery rack 120.

As the first battery rack 110 and the second battery rack 120 undergo aging, the battery capacity of the first battery rack 110 and the battery capacity of the second battery rack 120 may decrease, and thus, the battery controller 140 may periodically monitor the first battery current capacity of the first battery rack 110 and the second battery current capacity of the second battery rack 120. The battery controller 140 may update or reset the ratio set value based on the ratio of the first battery current capacity of the first battery rack 110 and the second battery current capacity of the second battery rack 120. For example, the term "battery current capacity" may refer to the total amount of current that may be discharged while the state of charge decreases from 100 % to 0 % and may be expressed in Ah. In the present specification, cell capacity is expressed in Ah, and battery capacity is expressed in Wh.

The battery controller 140 may control the power conversion circuit 130 such that the ratio of the first battery current i1 and the second battery current i2 may be equal to the ratio of the first battery current capacity and the second battery current capacity, and thus, a first state of charge SOC1 of the first battery rack 110 and a second state of charge SOC2 of the second battery rack 120 may increase or decrease in response to each other.

For example, if the first battery rack 110 includes twelve of the first battery modules each having a battery capacity of 7.6 kWh, the first battery rack 110 may have a first battery capacity of about 91.3 kWh. For example, if the second battery rack 120 includes six of the second battery modules each having a battery capacity of 24.3 kWh, the second battery rack 120 may have a second battery capacity of about 145.7 kWh. The first battery voltage V1 of the first battery rack 110 including twelve of the first battery modules may be about twice the second battery voltage V2 of the second battery rack 120 including six of the second battery modules.

The ratio of the first battery current capacity of the first battery rack 110 to the second battery current capacity of the second battery rack 120 may be approximately 91.3/2:145.7. In some embodiments, the battery controller 140 may set the ratio set value to be 1:3.2 and may adjust the level of the second conversion voltage V3 such that the ratio of the first battery current i1 and the second battery current i2 may be 1:3.2.

For example, if the ratio of the first battery current i1 and the second battery current i2 is, for example, 1:3.0 while the battery pack 100 is charged, the battery controller 140 may decrease the level of the second conversion voltage V3 so as to increase the second battery current i2. The battery controller 140 may decrease the level of the second conversion voltage V3 such that the ratio of the first battery current i1 and the second battery current i2 may increase to the ratio set value.

If the ratio of the first battery current i1 and the second battery current i2 is, for example, 1:3.0 while the battery pack 100 is discharged, the battery controller 140 may increase the level of the second conversion voltage V3 so as to increase the second battery current i2. The battery controller 140 may increase the level of the second conversion voltage V3 such that the ratio of the first battery current i1 and the second battery current i2 may increase to the ratio set value.

In other embodiments, the battery controller 140 may monitor the first state of charge SOC1 of the first battery rack 110 and the second state of charge SOC2 of the second battery rack 120. For example, the battery controller 140 may use a coulomb counting method to monitor the first state of charge SOC1 based on the first battery current i1 and the second state of charge SOC2 based on the second battery current i2. In another example, the battery controller 140 may estimate the first state of charge SOC1 based on an open circuit voltage of the first battery rack 110 and the second state of charge SOC2 based on an open circuit voltage of the second battery rack 120. In another example, the battery controller 140 may receive information about the first state of charge SOC1 from the first rack management unit of the first battery rack 110 and information about the second state of charge SOC2 from the second rack management unit of the second battery rack 120.

The battery controller 140 may adjust the level of the second conversion voltage V3 based on the first state of charge SOC1 and the second state of charge SOC2. For example, the battery controller 140 may adjust the level of the second conversion voltage V3 such that the first state of charge SOC1 and the second state of charge SOC2 may be equal to each other.

For example, if the first state of charge SOC1 is greater than the second state of charge SOC2 while the battery pack 100 is charged, the battery controller 140 may increase the second battery current i2 with which that second battery rack 120 is charged, and thus, the second state of charge SOC2 may increase faster than the first state of charge SOC1 increases. To this end, the battery controller 140 may decrease the level of the second conversion voltage V3.

For example, if the first state of charge SOC1 is greater than the second state of charge SOC2 while the battery pack 100 is discharged, the battery controller 140 may decrease the second battery current i2 coming out of the second battery rack 120, and thus, the second state of charge SOC2 may decrease slower than the first state of charge SOC1 decreases. To this end, the battery controller 140 may decrease the level of the second conversion voltage V3.

In the related art, a first battery rack is connected with a different type of second battery rack by using a power conversion circuit configured to convert a second rack voltage of the second battery rack into a first rack voltage of the first battery rack. The power conversion circuit is required to convert all the power output from the second battery rack and thus has a power conversion capacity enough to cover the entire second battery rack. This not only increases the size and manufacturing costs of the power conversion circuit, but also requires a separate heat dissipation unit to handle heat generated during a power conversion process.

In the present disclosure, the power conversion circuit 130 and the second battery rack 120 are connected in series to each other, and thus, the power conversion circuit 130 may convert only power necessary to maintain the second conversion voltage V3. For example, the power conversion circuit 130 may have a lower power conversion capacity than power conversion circuits of the related art. For example, the size and manufacturing costs of the power conversion circuit 130 may be reduced, and a separate heat dissipation unit may be omitted because heat generation reduces during a power conversion process. For example, the power conversion circuit 130 may not emit a large amount of heat, and thus, the total amount area occupied by the battery pack 100 may be reduced by placing the power conversion circuit 130 adjacent to the first and second battery racks 110, 120.

FIG.s 2 and 3 are circuit diagrams illustrating examples ("a" and "b") of the battery pack 100 shown in FIG. 1.

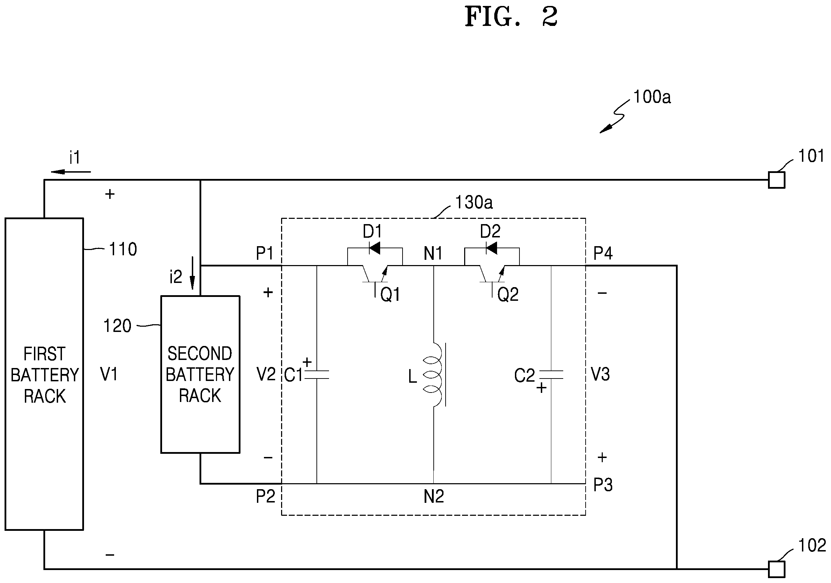

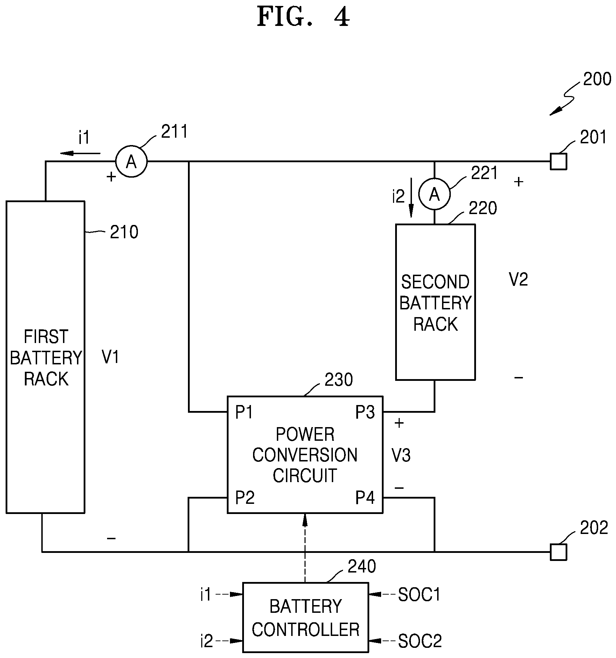

Referring to FIG. 2, a battery pack 100a may include a first battery rack 110 connected between a first pack terminal 101 and a second pack terminal 102 and having a first battery voltage V1, a second battery rack 120 having a second battery voltage V2, and a power conversion circuit 130a. Although not shown in FIG. 2, the battery pack 100a may further include a battery controller 140 (refer to FIG. 1) configured to control the power conversion circuit 130a. The battery pack 100a may further include a first current sensor 211 (refer to FIG. 4) configured to detect a first battery current i1 of the first battery rack 110, and/or a second current sensor 221 (refer to FIG. 4) configured to detect a second battery current i2 of the second battery rack 120.

The power conversion circuit 130a may be a bidirectional DC/DC converter having a first terminal P1, a second terminal P2, a third terminal P3, and a fourth terminal P4. The first terminal P1 may be commonly connected to the first pack terminal 101 and a positive terminal of the second battery rack 120, the second terminal P2 and the third terminal P3 may be commonly connected to a negative terminal of the second battery rack 120, and the fourth terminal P4 may be connected to the second pack terminal 102.

The power conversion circuit 130a may include a first switch Q1 between the first terminal P1 and a first intermediate node N1, a second switch Q2 between the first intermediate node N1 and the fourth terminal P4, and an inductor L between the first intermediate node N1 and a second intermediate node N2. The second intermediate node N2 may be commonly connected to the second terminal P2 and the third terminal P3.

The first switch Q1 may include a first diode D1, and the second switch Q2 may include a second diode D2. For example, the first switch Q1 and the second switch Q2 may each be an insulated gate bipolar transistor (IGBT) and may respectively include the first diode D1 and the second diode D2 that are of a body diode type. In another example, the first switch Q1 and the second switch Q2 may each be a bipolar junction transistor (BJT), a field effect transistor (FET), or a metal oxide semiconductor FET (MOSFET).

The power conversion circuit 130a may further include a first capacitor C1 between the first terminal P1 and the second terminal P2. The power conversion circuit 130a may further include a second capacitor C2 between the third terminal P3 and the fourth terminal P4. In some embodiments, the first capacitor C1 may be omitted.

The power conversion circuit 130a may convert a first conversion voltage V2 between the first and second terminals P1, P2 into a second conversion voltage V3 and output the second conversion voltage V3 between the third and fourth terminals P3, P4. The power conversion circuit 130a may convert the second conversion voltage V3 between the third and fourth terminals P3, P4 into the first conversion voltage V1 and output the first conversion voltage V1 between the first and second terminals P1, P2.

For example, if the first switch Q1 is turned on, current may flow from the first terminal P1 to the second terminal P2 through the first switch Q1 and the inductor L, and the inductor L may accumulate energy. If the first switch Q1 is turned off, the energy accumulated in the inductor L may move to the second capacitor C2 through the second diode D2. Therefore, the first conversion voltage V2 between the first and second terminals P1, P2 may be converted into the second conversion voltage V3 between the third and fourth terminals P3, P4. The level of the second conversion voltage V3 may be adjusted according to a duty ratio of the first switch Q1. The battery controller 140 may adjust the level of the second conversion voltage V3 by controlling the duty ratio of the first switch Q1.

If the second switch Q2 is turned on, current may flow from the third terminal P3 to the fourth terminal P4 through the inductor L and the second switch Q2, and energy stored in the second capacitor C2 may be accumulated in the inductor L. If the second switch Q2 is turned off, the energy accumulated in the inductor L may move to the first capacitor C1 and the second battery rack 120 through the first diode D1. Therefore, the second conversion voltage V3 between the third and fourth terminals P3, P4 may be converted into the first conversion voltage V2 between the first and second terminals P1, P2. The level of the first conversion voltage V2 and the level of the second conversion voltage V3 may be adjusted according to a duty ratio of the second switch Q2. The battery controller 140 may adjust the level of the second conversion voltage V3 by controlling the duty ratio of the second switch Q2.

For example, the first battery rack 110 may include twelve of the first battery modules connected in series to each other, and each of the first battery modules may include twenty-two of the first battery cells connected in series to each other. The cell capacity of each of the first battery cells may be 94 Ah. The battery capacity of the first battery rack 110 may be 91.3 kWh. The first battery voltage V1 of the first battery rack 110 may be, for example, about 818.4 V to about 1095.6 V depending on the state of charge of the first battery rack 110.

The second battery rack 120 may include four of the second battery modules connected in series to each other, and each of the second battery modules may include forty-four of the second battery cells connected in series and parallel to each other. The cell capacity of each of the second battery cells may be 150 Ah. The battery capacity of the second battery rack 120 may be 97.7 kWh. The second battery voltage V2 of the second battery rack 120 may be, for example, about 272.8 V to about 365.2 V depending on the state of charge of the second battery rack 120.

The second conversion voltage V3 of the power conversion circuit 130a may be about 545.6 V to about 730.4 V depending on the first battery voltage V1 and the second battery voltage V2. The power conversion circuit 130a may output the second conversion voltage V3 by boosting the first conversion voltage V2 by a factor of about 2. The boost ratio of the power conversion circuit 130a may be about 2. The buck ratio of the power conversion circuit 130a may be adjusted by the battery controller 140 according to the first battery current i1 and the second battery current i2. For example, the power conversion circuit 130a may have a power conversion capacity of about 50 kW.

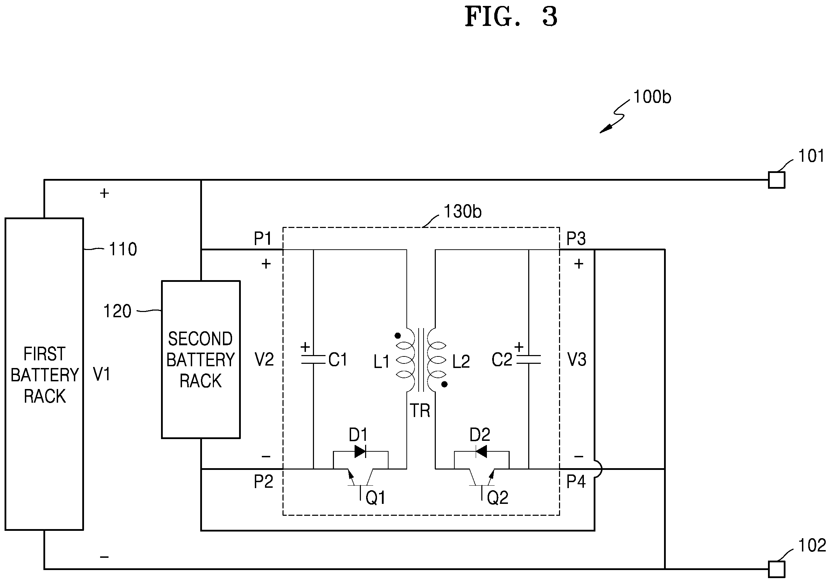

FIG. 3 is a circuit diagram illustrating another example of the battery pack 100 shown in FIG. 1.

Referring to FIG. 3, a battery pack 100b may include a first battery rack 110 connected between a first pack terminal 101 and a second pack terminal 102 and having a first battery voltage V1, a second battery rack 120 having a second battery voltage V2, and a power conversion circuit 130b. Although not shown in FIG. 3, the battery pack 100b may further include at least one member selected from the group consisting of a battery controller 140 (refer to FIG. 1) configured to control the power conversion circuit 130b, a first current sensor 111 (refer to FIG. 1), and a second current sensor 121 (refer to FIG. 1).

The power conversion circuit 130b may be a bidirectional DC/DC converter having a first terminal P1, a second terminal P2, a third terminal P3, and a fourth terminal P4. The power conversion circuit 130b may be a flyback converter. The first terminal P1 may be commonly connected to the first pack terminal 101 and a positive terminal of the second battery rack 120, the second terminal P2 may be commonly connected to a negative terminal of the second battery rack 120 and the third terminal P3, and the fourth terminal P4 may be connected to the second pack terminal 102.

The power conversion circuit 130b may include an additive-polarity transformer TR, and the additive-polarity transformer TR may include a primary coil L1 connected between the first terminal P1 and the second terminal P2 and a secondary coil L2 connected between the third terminal P3 and the fourth terminal P4. The ratio of turns of the primary coil L1 and turns of the secondary coil L2 may be set according to a target voltage conversion ratio of the power conversion circuit 130b.

The power conversion circuit 130b may include a first switch Q1 connected in series to the primary coil L1 between the first terminal P1 and the second terminal P2, and a second switch Q2 connected in series to the secondary coil L2 between the third terminal P3 and the fourth terminal P4. The first switch Q1 may include a first diode D1, and the second switch Q2 may include a second diode D2. For example, the first switch Q1 and the second switch Q2 may each be an IGBT and may respectively include the first diode D1 and the second diode D2 that are of a body diode type. In another example, the first switch Q1 and the second switch Q2 may each be a BJT, a FET, or a MOSFET.

The power conversion circuit 130b may further include a second capacitor C2 between the third terminal P3 and the fourth terminal P4. The power conversion circuit 130b may further include a first capacitor C1 between the first terminal P1 and the second terminal P2. In some embodiments, the first capacitor C1 may be omitted.

The power conversion circuit 130b may convert a first conversion voltage V2 between the first and second terminals P1, P2 into a second conversion voltage V3 and output the second conversion voltage V3 between the third and fourth terminals P3, P4. For example, the battery controller 140 may adjust the level of the second conversion voltage V3 by controlling a duty ratio of the first switch Q1.

The power conversion circuit 130b may convert the second conversion voltage V3 between the third and fourth terminals P3, P4 into the first conversion voltage V2 and output the first conversion voltage V2 between the first and second terminals P1, P2. For example, the battery controller 140 may adjust the level of the first conversion voltage V2 and the level of the second conversion voltage V3 by controlling a duty ratio of the second switch Q2.

For example, the first battery rack 110 may include twelve of the first battery modules connected in series to each other, and each of the first battery modules may include twenty-two of the first battery cells connected in series to each other. The cell capacity of each of the first battery cells may be 94 Ah. The battery capacity of the first battery rack 110 may be 91.3 kWh. The first battery voltage V1 of the first battery rack 110 may be, for example, about 818.4 V to about 1095.6 V depending on the state of charge of the first battery rack 110.

The second battery rack 120 may include six of the second battery modules connected in series to each other, and each of the second battery modules may include forty-four of the second battery cells connected in series and parallel to each other. The cell capacity of each of the second battery cells may be 150 Ah. The battery capacity of the second battery rack 120 may be 145.7 kWh. The second battery voltage V2 of the second battery rack 120 may be, for example, about 409.2 V to about 547.8 V depending on the state of charge of the second battery rack 120.

The second conversion voltage V3 of the power conversion circuit 130b may be about 409.2 V to about 547.8 V depending on the first battery voltage V1 and the second battery voltage V2. The power conversion circuit 130b may output the second conversion voltage V3 such that the magnitude of the first conversion voltage V2 and the magnitude of the second conversion voltage V3 may be approximately 1:1. As described above, the voltage conversion ratio of the power conversion circuit 130b may be controlled by the battery controller 140 according to a battery current i1 of the first battery rack 110 and a second battery current i2 of the second battery rack 120. For example, the power conversion circuit 130b may have a power conversion capacity of about 69 kW.

FIG. 4 is a block diagram illustrating a battery pack 200 according to other embodiments of the present disclosure.

Referring to FIG. 4, the battery pack 200 may include a first pack terminal 201, a second pack terminal 202, a first battery rack 210 having a first battery voltage V1, a second battery rack 220 having a second battery voltage V2, a power conversion circuit 230, and a battery controller 240.

The power conversion circuit 230 may include a first terminal P1, a second terminal P2, a third terminal P3, and a fourth terminal P4. The first terminal P1 may be connected to the first pack terminal 201, and the second terminal P2 and the fourth terminal P4 may be connected to the second pack terminal 202. The power conversion circuit 230 may bidirectionally convert a first conversion voltage V1 between the first and second terminals P1, P2 into a second conversion voltage V3 between the third and fourth terminals P3, P4.

The first battery rack 210 may be connected between the first and second pack terminals 201, 202. The first battery rack 210 may be connected between the first terminal P1 and the second terminal P2 of the power conversion circuit 230. The second battery pack 220 may be connected between the first pack terminal 201 and the third terminal P3 of the power conversion circuit 230. The battery controller 240 may control the power conversion circuit 230 to adjust the level of the second conversion voltage V3.

The first battery rack 210 may include a plurality of first battery modules connected in series to each other. Each of the first battery modules of the first battery rack 210 may include a plurality of first battery cells. The second battery rack 220 may include a plurality of second battery modules connected in series to each other. Each of the second battery modules of the second battery rack 220 may include a plurality of second battery cells. The first battery rack 210 and the second battery rack 220 may have different configurations.

Positive and negative terminals of the first battery rack 210 may be substantially directly connected to the first pack terminal 201 and the second pack terminal 202, respectively. The first battery rack 210 may be connected between the first pack terminal 201 and the second pack terminal 202 through a contactor or a circuit breaker.

The battery pack 200 may further include a first current sensor 211 and a second current sensor 221. The battery controller 240 may detect a first battery current i1 flowing through the first battery rack 210 by using the first current sensor 211 and a second battery current i2 flowing through the second battery rack 220 by using the second current sensor 221.

The power conversion circuit 230 may be a bidirectional DC/DC converter including the first terminal P1, the second terminal P2, the third terminal P3, and the fourth terminal P4. The power conversion circuit 230 may convert the first conversion voltage V1 between the first and second terminals P1, P2 into the second conversion voltage V3 and output the second battery voltage V2 between the third and fourth terminals P3, P4. The power conversion circuit 230 may convert the second conversion voltage V3 between the third and fourth terminals P3, P4 into the first conversion voltage V1 and output the first conversion voltage V1 between the first and second terminals P1, P2.

The first terminal P1 and the second terminal P2 may be connected to the first battery rack 210 and may receive the first battery voltage V1 of the first battery rack 210. The first conversion voltage V1 between the first and second terminals P1, P2 may be substantially the same as the first battery voltage V1 of the first battery rack 210. The first terminal P1 may be connected to the first pack terminal 201, and the second terminal P2 and the fourth terminal P4 may be connected to the second pack terminal 202. The third terminal P3 may be connected to a negative terminal of the second battery rack 220. For example, as shown in FIG. 4, the second battery rack 220 and the third and fourth terminals P3, P4 of the power conversion circuit 230 may be connected in series to each other between the first and second pack terminals 201, 202, and the first battery voltage V1 of the first battery rack 210 may be substantially equal to the sum of the second battery voltage V2 and the second conversion voltage V3 of the second battery rack 220.

The power conversion circuit 230 may be controlled by the battery controller 240. The battery controller 240 may adjust the level of the second conversion voltage V3 based on the second battery current i2. For example, the battery controller 240 may adjust the level of the second conversion voltage V3 such that the ratio of the first battery current i1 and the second battery current i2 may be equal to a preset ratio set value. For example, the ratio set value may be determined according to the ratio of a first battery current capacity of the first battery rack 210 and a second battery current capacity of the second battery rack 220.

The battery controller 240 may control the power conversion circuit 230 such that the ratio of the first battery current i1 and the second battery current i2 may be equal to the ratio of the first battery current capacity of the first battery rack 210 and the second battery current capacity of the second battery rack 220, and thus, a first state of charge SOC1 of the first battery rack 210 and a second state of charge SOC2 of the second battery rack 220 may increase or decrease in response to each other.

For example, if the ratio of the first battery current capacity of the first battery rack 210 and the second battery current capacity of the second battery rack 220 is 1:3.2, the battery controller 240 may set the ratio set value to be 1:3.2 and may adjust the level of the second conversion voltage V3 such that the ratio of the first battery current i1 and the second battery current i2 may be 1:3.2.

For example, if the ratio of the first battery current i1 and the second battery current i2 is, for example, 1:3.4 while the battery pack 200 is charged, the battery controller 240 may increase the level of the second conversion voltage V3 to decrease the second battery current i2. The battery controller 240 may increase the level of the second conversion voltage V3 such that the ratio of the first battery current i1 and the second battery current i2 may decrease to the ratio set value.

If the ratio of the first battery current i1 and the second battery current i2 is, for example, 1:3.4 while the battery pack 200 is discharged, the battery controller 240 may decrease the level of the second conversion voltage V3 to decrease the second battery current i2. The battery controller 240 may decrease the level of the second conversion voltage V3 such that the ratio of the first battery current i1 and the second battery current i2 may decrease to the ratio set value.

In other embodiments, the battery controller 240 may monitor the first state of charge SOC1 of the first battery rack 210 and the second state of charge SOC2 of the second battery rack 220. The battery controller 240 may adjust the level of the second conversion voltage V3 based on the first state of charge SOC1 and the second state of charge SOC2.

For example, the battery controller 240 may adjust the level of the second conversion voltage V3 such that the first state of charge SOC1 and the second state of charge SOC2 may be equal to each other. For example, assuming that the first state of charge SOC1 is less than the second state of charge SOC2 while the battery pack 200 is charged, the battery controller 240 may decrease the second battery current i2 of the second battery rack 220 such that the second state of charge SOC2 may increase more slowly than the first state of charge SOC1 increases. To this end, the battery controller 240 may increase the level of the second conversion voltage V3.

For example, assuming that the first state of charge SOC1 is less than the second state of charge SOC2 while the battery pack 200 is discharged, the battery controller 240 may increase the second battery current i2 such that the second state of charge SOC2 may decrease faster than the first state of charge SOC1 decreases. To this end, the battery controller 240 may increase the level of the second conversion voltage V3.

In the present disclosure, the power conversion circuit 230 and the second battery rack 220 are connected in series to each other, and thus, the power conversion circuit 230 may convert only the power necessary to maintain the second conversion voltage V3. For example, the power conversion circuit 230 may have a lower power conversion capacity than power conversion circuits of the related art. For example, the size and manufacturing costs of the power conversion circuit 230 may be reduced, and a separate heat dissipation unit may be omitted because heat generation reduces during a power conversion process. For example, the power conversion circuit 230 may not emit a large amount of heat, and thus, the total area occupied by the battery pack 200 may be reduced by placing the power conversion circuit 230 adjacent to the first and second battery racks 210, 220.

FIG.s 5 & 6 are circuit diagrams illustrating examples ("a" and "b") of the battery pack 200 shown in FIG. 4.

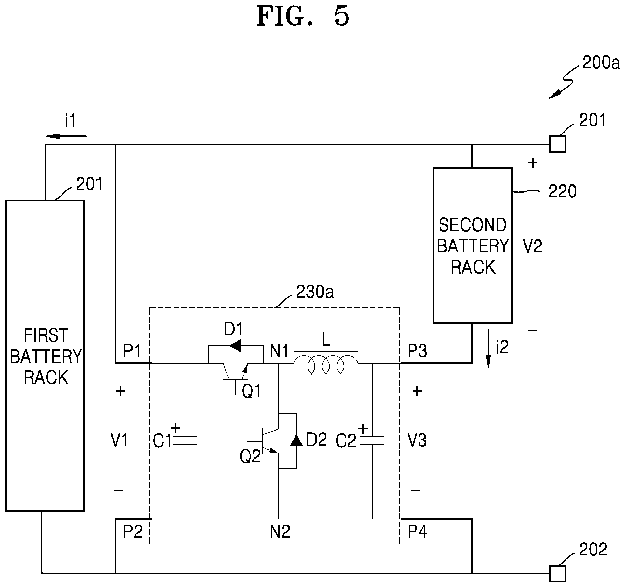

Referring to FIG. 5, a battery pack 200a may include a first battery rack 210 connected between a first pack terminal 201 and a second pack terminal 202 and having a first battery voltage V1, a second battery rack 220 having a second battery voltage V2, and a power conversion circuit 230a. Although not shown in FIG. 5, the battery pack 200a may further include a battery controller 240 (refer to FIG. 4) configured to control the power conversion circuit 230a. The battery pack 200a may further include a first current sensor 211 (refer to FIG. 4) configured to detect a first battery current i1 of the first battery rack 210, and/or a second current sensor 221 (refer to FIG. 4) configured to detect a second battery current i2 of the second battery rack 220.

The power conversion circuit 230a may be a DC/DC converter having a first terminal P1, a second terminal P2, a third terminal P3, and a fourth terminal P4. The power conversion circuit 230a may be a buck converter. The first terminal P1 may be commonly connected to the first pack terminal 201 and a positive terminal of the first battery rack 210, the second terminal P2 and the fourth terminal P4 may be commonly connected to the second pack terminal 202, and the third terminal P3 may be connected to a negative terminal of the second battery rack 220.

The power conversion circuit 230a may include a first switch Q1 between the first terminal P1 and a first intermediate node N1, an inductor L between the first intermediate node N1 and the third terminal P3, and a second switch Q2 between the first intermediate node N1 and a second intermediate node N2. The second intermediate node N2 may be commonly connected to the second terminal P2 and the fourth terminal P4.

The first switch Q1 may include a first diode D1, and the second switch Q2 may include a second diode D2. For example, the first switch Q1 and the second switch Q2 may each be an IGBT and may respectively include the first diode D1 and the second diode D2 that are of a body diode type. In another example, the first switch Q1 and the second switch Q2 may each be a BJT, a FET, or a MOSFET.

The power conversion circuit 230a may further include a second capacitor C2 between the third terminal P3 and the fourth terminal P4. The power conversion circuit 230a may further include a first capacitor C1 between the first terminal P1 and the second terminal P2. In some embodiments, the first capacitor C1 may be omitted.

The power conversion circuit 230a may convert a first conversion voltage V1 between the first and second terminals P1, P2 into a second conversion voltage V3 and output the second conversion voltage V3 between the third and fourth terminals P3, P4. The power conversion circuit 230a may convert the second conversion voltage V3 between the third and fourth terminals P3, P4 into the first conversion voltage V1 and output the first conversion voltage V1 between the first and second terminals P1, P2.

For example, if the first switch Q1 is turned on and the second switch Q2 is turned off, current may flow from the first terminal P1 to the third terminal P3 through the first switch Q1 and the inductor L, and energy stored in the first capacitor C1 may be accumulated in the inductor L. If the first switch Q1 is turned off and the second switch Q2 is turned on, the energy accumulated in the inductor L may move to the second capacitor C2. Therefore, the first conversion voltage V1 between the first and second terminals P1, P2 may be converted into the second conversion voltage V3 between the third and fourth terminals P3, P4. The level of the second conversion voltage V3 may be adjusted according to a duty ratio of the first switch Q1 and a duty ratio of the second switch Q2. The battery controller 240 may adjust the level of the second conversion voltage V3 by controlling the duty ratio of the first switch Q1 and the duty ratio of the second switch Q2.

If the second switch Q2 is turned on and the first switch Q1 is turned off, the second capacitor C2, the inductor L, and the second switch Q2 may form a closed circuit, and current may flow from the first intermediate node N1 to the second intermediate node N2 through the inductor L such that the energy stored in the second capacitor C2 may be accumulated in the inductor L. If the second switch Q2 is turned off, the energy accumulated in the inductor L may move to the first capacitor C1 through the first diode D1. Therefore, the second conversion voltage V3 between the third and fourth terminals P3, P4 may be converted into the first conversion voltage V1 between the first and second terminals P1, P2. The first conversion voltage V1 is the same as the first battery voltage V1 of the first battery rack 210, and thus, the level of the second conversion voltage V3 may be adjusted according to the duty ratio of the second switch Q2. The battery controller 240 may adjust the level of the second conversion voltage V3 by controlling the duty ratio of the second switch Q2.

For example, the first battery rack 210 may include twelve of the first battery modules connected in series to each other, and each of the first battery modules may include twenty-two of the first battery cells connected in series to each other. The cell capacity of each of the first battery cells may be 94 Ah. The battery capacity of the first battery rack 210 may be 91.3 kWh. The first battery voltage V1 of the first battery rack 210 may be, for example, about 818.4 V to about 1095.6 V depending on the state of charge of the first battery rack 210.

The second battery rack 220 may include four of the second battery modules connected in series to each other, and each of the second battery modules may include forty-four of the second battery cells connected in series and parallel to each other. The cell capacity of each of the second battery cells may be 150 Ah. The battery capacity of the second battery rack 220 may be 97.7 kWh. The second battery voltage V2 of the second battery rack 220 may be, for example, about 272.8 V to about 365.2 V depending on the state of charge of the second battery rack 220.

The second conversion voltage V3 of the power conversion circuit 230a may be about 545.6 V to about 730.4 V depending on the first battery voltage V1 and the second battery voltage V2. The power conversion circuit 230a may output the second conversion voltage V3 by decreasing the first conversion voltage V1 by a factor of about 2/3. The buck ratio of the power conversion circuit 230a may be about 0.67, and the buck ratio of the power conversion circuit 230a may be adjusted by the battery controller 240 according to the first battery current i1 and the second battery current i2. For example, the power conversion circuit 230a may have a capacity of about 110 kW.

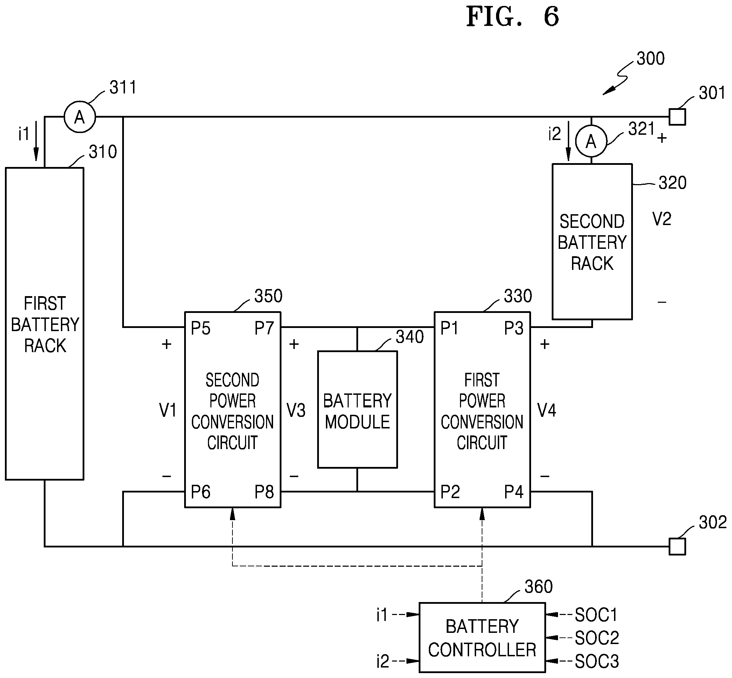

FIG. 6 is a block diagram illustrating a battery pack 300 according to other embodiments of the present disclosure.

Referring to FIG. 6, the battery pack 300 may include a first pack terminal 301, a second pack terminal 302, a first battery rack 310 having a first battery voltage V1, a second battery rack 320 having a second battery voltage V2, a first power conversion circuit 330, and a battery controller 360. The battery pack 300 may further include a battery module 340 having a third battery voltage V3 and a second power conversion circuit 350.

The first power conversion circuit 330 may include a first terminal P1, a second terminal P2, a third terminal P3, and a fourth terminal P4. The first terminal P1 may be connected to a positive terminal of the battery module 340, the second terminal P2 may be connected to a negative terminal of the battery module 340, the third terminal P3 may be connected to the second battery rack 320, and the fourth terminal P4 may be connected to the second pack terminal 302. The first power conversion circuit 330 may bidirectionally convert a first conversion voltage V3 between the first and second terminals P1, P2 into a second conversion voltage V4 between the third and fourth terminals P3, P4.

The second power conversion circuit 350 may include a fifth terminal P5, a sixth terminal P6, a seventh terminal P7, and an eighth terminal P8. The fifth terminal P5 may be connected to a positive terminal of the first battery rack 310 and the first pack terminal 301, the sixth terminal P6 may be connected to a negative terminal of the first battery rack 310 and the second pack terminal 302, the seventh terminal P7 may be connected to the positive terminal of the battery module 340 and the first terminal P1 of the first power conversion circuit 330, and the eighth terminal P8 may be connected to the positive terminal of the battery module 340 and the second terminal P2 of the first power conversion circuit 330.

The second power conversion circuit 350 may bidirectionally convert the first battery voltage V1 between the fifth terminal P5 and the sixth terminal P6 into the third battery voltage V3 between the seventh terminal P7 and the eighth terminal P8.

The first battery rack 310 may be connected between the first and second pack terminals 301, 302. The first battery rack 310 may be connected between the fifth terminal P5 and the sixth terminal P6 of the second power conversion circuit 350. The second battery pack 320 may be connected between the first pack terminal 301 and the third terminal P3 of the first power conversion circuit 330. The battery module 340 may be commonly connected between the first and second terminals P1, P2 of the first power conversion circuit 330 and between the seventh and eighth terminals P7, P8 of the second power conversion circuit 350.

The battery controller 360 may control the first power conversion circuit 330 to adjust the level of the second conversion voltage V4. The battery controller 360 may control the second power conversion circuit 350 to maintain the state of charge of the battery module 340 within a preset range.

The first battery rack 310 may include a plurality of first battery modules connected in series to each other. Each of the first battery modules of the first battery rack 310 may include a plurality of first battery cells. The second battery rack 320 may include a plurality of second battery modules connected in series to each other. Each of the second battery modules of the second battery rack 320 may include a plurality of second battery cells. The first battery rack 310 and the second battery rack 320 may have different configurations.

The positive and negative terminals of the first battery rack 310 may be substantially directly connected to the first pack terminal 301 and the second pack terminal 302, respectively. The first battery rack 310 may be connected between the first pack terminal 301 and the second pack terminal 302 through a contactor or a circuit breaker.

The battery pack 300 may further include a first current sensor 311 and a second current sensor 321. The battery controller 360 may detect a first battery current i1 flowing through the first battery rack 310 by using the first current sensor 311 and a second battery current i2 flowing through the second battery rack 320 by using the second current sensor 321. The battery pack 300 may further include a current sensor (not shown) configured to detect a third battery current flowing through the battery module 340.

The first power conversion circuit 330 may be a bidirectional DC/DC converter. The first power conversion circuit 330 may convert the first conversion voltage V3 between the first and second terminals P1, P2 into the second conversion voltage V4 and output the second conversion voltage V4 between the third and fourth terminals P3, P4. The first power conversion circuit 330 may convert the second conversion voltage V4 between the third and fourth terminals P3, P4 into the first conversion voltage V3 and output the first conversion voltage V3 between the first and second terminals P1, P2.

The first terminal P1 and the second terminal P2 may be respectively connected to the positive and negative terminals of the battery module 340 and may receive the third battery voltage V3 of the battery module 340. The first conversion voltage V3 between the first and second terminals P1, P2 may be substantially the same as the third battery voltage V3 of the battery module 340. The third terminal P3 may be connected to a negative terminal of the second battery rack 320, and the fourth terminal P4 may be connected to the second pack terminal 302. For example, as shown in FIG. 6, the second battery rack 320 and the third and fourth terminals P3, P4 of the first power conversion circuit 330 may be connected in series to each other between the first and second pack terminals 301, 302, and the first battery voltage V1 of the first battery rack 310 may be substantially the same as the sum of the second battery voltage V2 of the second battery rack 320 and the second conversion voltage V4.

The second power conversion circuit 350 may be a bidirectional DC/DC converter. The second power conversion circuit 350 may convert the first battery voltage V1 between the fifth and sixth terminals P5, P6 into the third battery voltage V3 and output the third battery voltage V3 between the seventh and eighth terminals P7, P8. The second power conversion circuit 350 may convert the third battery voltage V3 between the seventh and eighth terminals P7, P8 into the first battery voltage V1 and output the first battery voltage V1 between the fifth and sixth terminals P5, P6.

The fifth terminal P5 and the sixth terminal P6 may be respectively connected to the positive and negative terminals of the first battery rack 310 and may receive the first battery voltage V1 of the first battery rack 310. The seventh terminal P7 and the eighth terminal P8 may be respectively connected to the positive and negative terminals of the battery module 340 and may receive the third battery voltage V3 of the battery module 340.

The first power conversion circuit 330 and the second power conversion circuit 350 may be controlled by the battery controller 360. The battery controller 360 may adjust the level of the second conversion voltage V4 based on the second battery current i2. For example, the battery controller 360 may adjust the level of the second conversion voltage V4 such that the ratio of the first battery current i1 and the second battery current i2 may be equal to a ratio set value. For example, the ratio set value may be set according to the ratio of a first battery current capacity of the first battery rack 310 and a second battery current capacity of the second battery rack 320.

The first power conversion circuit 330 may be controlled to adjust the ratio of the first battery current i1 and the second battery current i2 to be the same as the ratio of the first battery current capacity of the first battery rack 310 and the second battery current capacity of the second battery rack 320, and thus, a first state of charge SOC1 of the first battery rack 310 and a second state of charge SOC2 of the second battery rack 320 may increase or decrease in response to each other.

In other embodiments, the battery controller 360 may monitor the first state of charge SOC1 of the first battery rack 310 and the second state of charge SOC2 of the second battery rack 320. The battery controller 360 may adjust the level of the second conversion voltage V4 such that the first state of charge SOC1 and the second state of charge SOC2 may be equal to each other.

The battery controller 360 may detect a third state of charge SOC3 of the battery module 340. For example, the battery controller 360 may estimate the third state of charge SOC3 based on an open circuit voltage of the battery module 340. The battery controller 360 may control the second power conversion circuit 350 based on the third state of charge SOC3. For example, the battery controller 360 may manage the third state of charge SOC3 of the battery module 340 such that the third state of charge SOC3 may not be outside a preset range.

For example, the third state of charge SOC3 may be maintained within a range of about 20 % to about 80 %. If the third state of charge SOC3 is less than a reference value, the second power conversion circuit 350 may be controlled to charge the battery module 340 with energy stored in the first battery rack 310. For example, if the third state of charge SOC3 is greater than the reference value, the second power conversion circuit 350 may be controlled to charge the first battery rack 310 with energy stored in the battery module 340.

In some embodiments, the battery controller 360 may control the first power conversion circuit 330 such that the first state of charge SOC1 of the first battery rack 310 and the second state of charge SOC2 of the second battery rack 320 may be equal to each other. It may be understood that power consumed in a power conversion process of the first power conversion circuit 330 is supplied from the battery module 340. It may be understood that energy used by the battery module 340 to operate the first power conversion circuit 330 is supplied from the first battery rack 310 through the second power conversion circuit 350.

In the present disclosure, the first power conversion circuit 330 and the second battery rack 320 are connected in series to each other, and thus, the first power conversion circuit 330 may convert only power necessary to maintain the second conversion voltage V4. For example, the first power conversion circuit 330 may have a lower power conversion capacity than power conversion circuits of the related art. For example, the size and manufacturing costs of the first power conversion circuit 330 may be reduced, and a separate heat dissipation unit may be omitted because heat generation reduces during a power conversion process. For example, the first power conversion circuit 330 may not emit a large amount of heat, and thus, the total area occupied by the battery pack 300 may be reduced by placing the first power conversion circuit 330 adjacent to the first and second battery racks 310, 320.

FIG.s 7 & 8 are circuit diagrams illustrating examples ("a" and "b") of the battery pack 300 shown in FIG. 6.

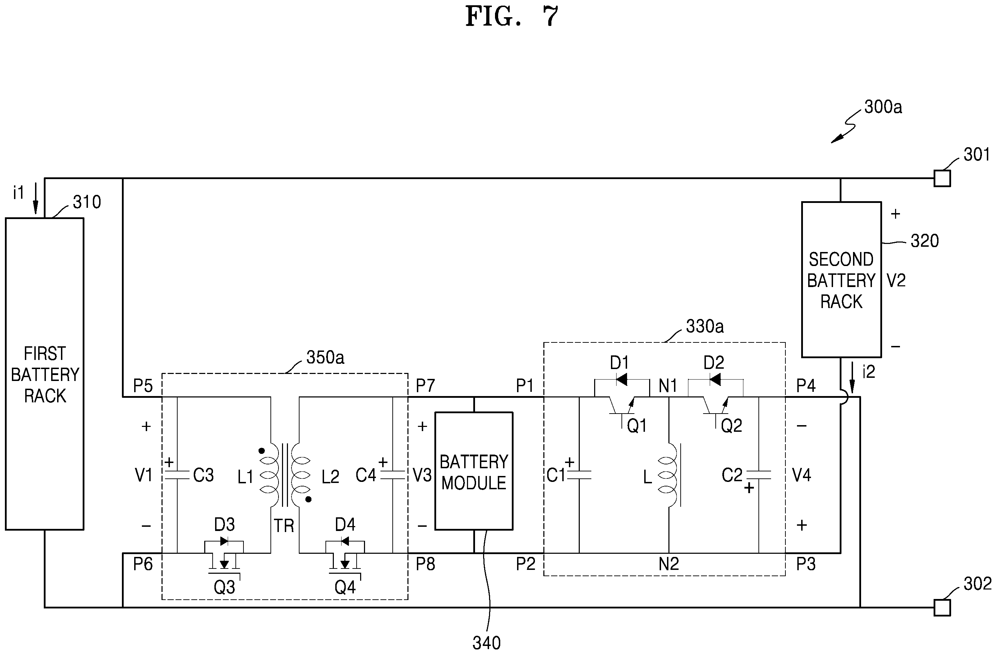

Referring to FIG. 7, a battery pack 300a may include a first battery rack 310 connected between a first pack terminal 301 and a second pack terminal 302 and having a first battery voltage V1, a second battery rack 320 having a second battery voltage V2, a first power conversion circuit 330a having first to fourth terminals P1, P2, P3, and P4, a battery module 340 having a third battery voltage V3, and a second power conversion circuit 350a having fifth to eighth terminals P5, P6, P7, and P8. Although not shown in FIG. 5, the battery pack 300a may further include a battery controller 360 (refer to FIG. 6) configured to control the first power conversion circuit 330a and the second power conversion circuit 350a. The battery pack 300a may further include a first current sensor 311 (refer to FIG. 6) and a second current sensor 321 (refer to FIG. 6).

The first power conversion circuit 330a may be a DC/DC converter. The first terminal P1 and the second terminal P2 may be respectively connected to positive and negative terminals of the battery module 340, the third terminal P3 may be connected to a negative terminal of the second battery rack 320, and the fourth terminal P4 may be connected to the second pack terminal 302.

The second power conversion circuit 350a may be an isolated DC/DC converter. The fifth terminal P5 and the sixth terminal P6 may be respectively connected to positive and negative terminals of the first battery rack 310, and the seventh terminal P7 and the eighth terminal P8 may be respectively connected to the positive and negative terminals of the battery module 340.

The first power conversion circuit 330a may include a first switch Q1 between the first terminal P1 and a first intermediate node N1, a second switch Q2 between the first intermediate node N1 and the fourth terminal P4, and an inductor L between the first intermediate node N1 and a second intermediate node N2. The second intermediate node N2 may be commonly connected to the second terminal P2 and the third terminal P3.

The first switch Q1 may include a first diode D1, and the second switch Q2 may include a second diode D2. For example, the first switch Q1 and the second switch Q2 may each be an IGBT and may respectively include the first diode D1 and the second diode D2 that are of a body diode type. In another example, the first switch Q1 and the second switch Q2 may each be a BJT, a FET, or a MOSFET.

The first power conversion circuit 330a may further include a second capacitor C2 between the third terminal P3 and the fourth terminal P4. The first power conversion circuit 330a may further include a first capacitor C1 between the first terminal P1 and the second terminal P2. In some embodiments, the first capacitor C1 may be omitted.

The first power conversion circuit 330a may convert a first conversion voltage V3 between the first and second terminals P1, P2 into a second conversion voltage V4 and output the second conversion voltage V4 between the third and fourth terminals P3, P4. The first power conversion circuit 330a may convert the second conversion voltage V4 between the third and fourth terminals P3, P4 into the first conversion voltage V3 and output the first conversion voltage V3 between the first and second terminals P1, P2.

For example, if the first switch Q1 is turned on, current may flow from the first terminal P1 to the second terminal P2 through the first switch Q1 and the inductor L, and energy stored in the first capacitor C1 and the battery module 340 may be accumulated in the inductor L. If the first switch Q1 is turned off, the energy accumulated in the inductor L may move to the second capacitor C2 through the second diode D2. Therefore, the first conversion voltage V3 between the first and second terminals P1, P2 may be converted into the second conversion voltage V4 between the third and fourth terminals P3, P4. The level of the second conversion voltage V4 may be adjusted according to a duty ratio of the first switch Q1. The battery controller 360 may adjust the level of the second conversion voltage V4 by controlling the duty ratio of the first switch Q1.

If the second switch Q2 is turned on, current may flow from the third terminal P3 to the fourth terminal P4 through the inductor L and the second switch Q2, and energy of the second capacitor C2 may be accumulated in the inductor L. If the second switch Q2 is turned off, the energy accumulated in the inductor L may move to the first capacitor C1 and the battery module 340 through the first diode D1. Therefore, the second conversion voltage V4 between the third and fourth terminals P3, P4 may be converted into the first conversion voltage V3 between the first and second terminals P1, P2. The level of the first conversion voltage V3 and the level of the second conversion voltage V4 may be adjusted according to a duty ratio of the second switch Q2. The battery controller 360 may adjust the level of the second conversion voltage V4 by controlling the duty ratio of the second switch Q2.

The second power conversion circuit 350a may be a flyback converter. The second power conversion circuit 350a may include an additive-polarity transformer TR, and the additive-polarity transformer TR may include a primary coil L1 connected between the fifth terminal P5 and the sixth terminal P6 and a secondary coil L2 connected between the seventh terminal P7 and the eighth terminal P8. The ratio of turns of the primary coil L1 and turns of the secondary coil L2 may be set according to a target voltage conversion ratio of the second power conversion circuit 350a.

The second power conversion circuit 350a may include a third switch Q3 connected in series to the primary coil L1 between the fifth terminal P5 and the sixth terminal P6, and a fourth switch Q4 connected in series to the secondary coil L2 between the seventh terminal P7 and the eighth terminal P8. The third switch Q3 may include a third diode D3, and the fourth switch Q4 may include a second diode D4. For example, the third switch Q3 and the fourth switch Q4 may each be a FET and may respectively include the third diode D3 and the fourth diode D4 that are of a body diode type. In another example, the third switch Q3 and the fourth switch Q4 may each be a BJT, an IGBT, or a MOSFET.

The second power conversion circuit 350a may further include a third capacitor C3 between the fifth terminal P5 and the sixth terminal P6. The second power conversion circuit 350a may further include a fourth capacitor C4 between the seventh terminal P7 and the eighth terminal P8. In some embodiments, the third capacitor C3 and/or the fourth capacitor C4 may be omitted.

The second power conversion circuit 350a may convert the first battery voltage V1 between the fifth and sixth terminals P5, P6 into the third battery voltage V3 and output the third battery voltage V3 between the seventh and eighth terminals P7, P8. For example, the battery controller 360 may adjust the level of the third battery voltage V3 by controlling the duty ratio of the first switch Q1.

The second power conversion circuit 350a may convert the third battery voltage V3 between the seventh and eighth terminals P7, P8 into the first battery voltage V1 and output the first battery voltage V1 between the fifth and sixth terminals P5, P6. For example, the battery controller 360 may adjust the level of the first battery voltage V1 and the level of the third battery voltage V3 by controlling the duty ratio of the second switch Q2.

For example, the first battery rack 310 may include twelve of the first battery modules connected in series to each other, and each of the first battery modules may include twenty-two of the first battery cells connected in series to each other. The cell capacity of each of the first battery cells may be 94 Ah. The battery capacity of the first battery rack 310 may be 91.3 kWh. The first battery voltage V1 of the first battery rack 310 may be, for example, about 818.4 V to about 1095.6 V depending on the state of charge of the first battery rack 310.

The second battery rack 320 may include eleven of the second battery modules connected in series to each other, and each of the second battery modules may include forty-four of the second battery cells connected in series and parallel to each other. The cell capacity of each of the second battery cells may be 150 Ah. The battery capacity of the second battery rack 320 may be 267.2 kWh. The second battery voltage V2 of the second battery rack 320 may be, for example, about 750.2 V to about 1004.3 V depending on the state of charge of the second battery rack 320.

The battery module 340 may include forty-four of the third battery cells connected in series and parallel to each other. The cell capacity of each of the third battery cells may be 150 Ah. The battery capacity of the battery module 340 may be 24.3 kWh. The third battery voltage V3 of the battery module 340 may be, for example, about 68.2 V to about 91.3 V depending on the state of charge of the battery module 340. The third battery cells and the second battery cells may be of the same type. The battery module 340 may include a plurality of battery modules connected in series and/or parallel to each other.

The second conversion voltage V4 of the first power conversion circuit 330a may be about 68.2 V to about 91.3 V depending on the first battery voltage V1 and the second battery voltage V2. The first power conversion circuit 330a may output the second conversion voltage V4 such that the ratio of the first conversion voltage V3 and the second conversion voltage V4 may be 1:1. The boost ratio of the first power conversion circuit 330a may be about 1:1 and may be controlled by the battery controller 360 according to a first battery current i1 and a second battery current i2. For example, the first power conversion circuit 330a may have a power conversion capacity of about 15 kW.

The second power conversion circuit 350a may convert the first battery voltage V1 into the third battery voltage V3. The buck ratio of the first power conversion circuit 330a may be about 12:1, and the buck ratio of the second power conversion circuit 350a may be adjusted by the battery controller 360 according to a third state of charge of the battery module 340. For example, the second power conversion circuit 350a may have a power conversion capacity of about 550W.

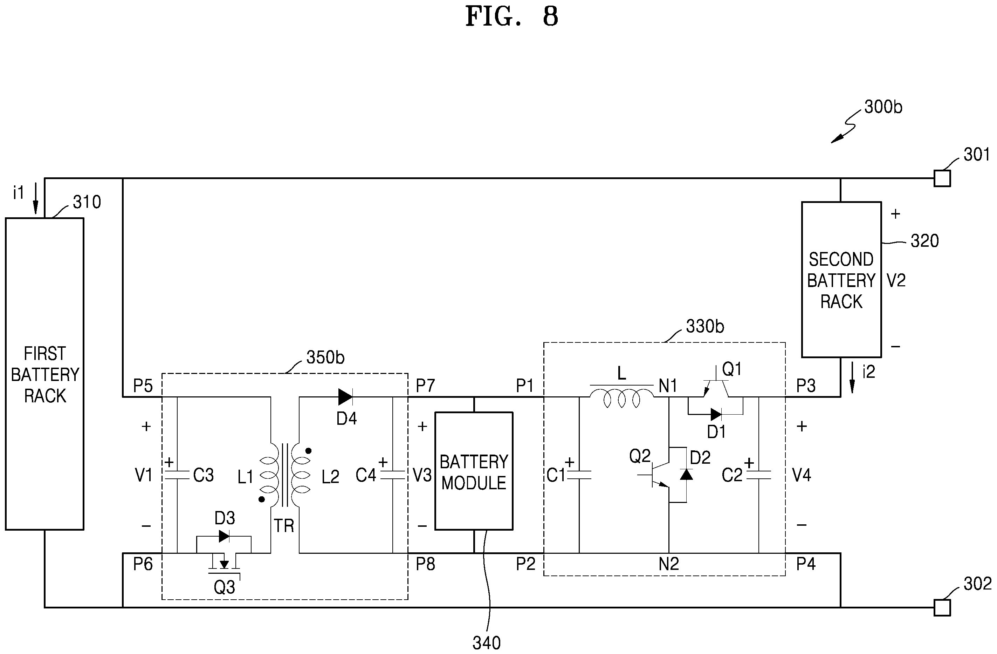

FIG. 8 is a circuit diagram illustrating another example of the battery pack 300 shown in FIG. 6.

Referring to FIG. 8, a battery pack 300b may include a first battery rack 310 connected between a first pack terminal 301 and a second pack terminal 302 and having a first battery voltage V1, a second battery rack 320 having a second battery voltage V2, a first power conversion circuit 330b having first to fourth terminals P1, P2, P3, and P4, a battery module 340 having a third battery voltage V3, and a second power conversion circuit 350b having fifth to eighth terminals P5, P6, P7, and P8. Although not shown in FIG. 8, the battery pack 300b may further include a battery controller 360 (refer to FIG. 6) configured to control the first power conversion circuit 330b and the second power conversion circuit 350b. The battery pack 300b may further include a first current sensor 311 (refer to FIG. 6) and a second current sensor 321 (refer to FIG. 6).

The first power conversion circuit 330b may be a DC/DC converter. The first terminal P1 and the second terminal P2 may be respectively connected to positive and negative terminals of the battery module 340, the third terminal P3 may be connected to a negative terminal of the second battery rack 320, and the fourth terminal P4 may be connected to the second pack terminal 302.

The second power conversion circuit 350b may be an isolated DC/DC converter. The second power conversion circuit 350b may be a flyback converter. The fifth terminal P5 and the sixth terminal P6 may be respectively connected to positive and negative terminals of the first battery rack 310, and the seventh terminal P7 and the eighth terminal P8 may be respectively connected to the positive and negative terminals of the battery module 340.

The first power conversion circuit 330b may include an inductor L between the first terminal P1 and a first intermediate node N1, a first switch Q1 between the first intermediate node N1 and the third terminal P3, and a second switch Q2 between the first intermediate node N1 and a second intermediate node N2. The second intermediate node N2 may be commonly connected to the second terminal P2 and the fourth terminal P4.

The first switch Q1 may include a first diode D1, and the second switch Q2 may include a second diode D2. For example, the first switch Q1 and the second switch Q2 may each be an IGBT and may respectively include the first diode D1 and the second diode D2 that are of a body diode type. In another example, the first switch Q1 and the second switch Q2 may each be a BJT, a FET, or a MOSFET.

The first power conversion circuit 330b may further include a second capacitor C2 between the third terminal P3 and the fourth terminal P4. The first power conversion circuit 330b may further include a first capacitor C1 between the first terminal P1 and the second terminal P2. In some embodiments, the first capacitor C1 may be omitted.

The first power conversion circuit 330b may convert a first conversion voltage V3 between the first and second terminals P1, P2 into a second conversion voltage V4 and output the second conversion voltage V4 between the third and fourth terminals P3, P4. The first power conversion circuit 330b may convert the second conversion voltage V4 between the third and fourth terminals P3, P4 into the first conversion voltage V3 and output the first conversion voltage V3 between the first and second terminals P1, P2.

For example, if the second switch Q2 is turned on, current may flow from the first terminal P1 to the second terminal P2 through the inductor L and the second switch Q2, and energy stored in the first capacitor C1 and the battery module 340 may be accumulated in the inductor L. If the second switch Q2 is turned off, the energy accumulated in the inductor L may move to the second capacitor C2 through the first diode D1. Therefore, the first conversion voltage V3 between the first and second terminals P1, P2 may be converted into the second conversion voltage V4 between the third and fourth terminals P3, P4. The level of the second conversion voltage V4 may be adjusted according to a duty ratio of the second switch Q2. The battery controller 360 may adjust the level of the second conversion voltage V4 by controlling the duty ratio of the second switch Q2.

The second power conversion circuit 350b may include an additive-polarity transformer TR, and the additive-polarity transformer TR may include a primary coil L1 connected between the fifth terminal P5 and the sixth terminal P6 and a secondary coil L2 connected between the seventh terminal P7 and the eighth terminal P8. The ratio of turns of the primary coil L1 and turns of the secondary coil L2 may be set according to a target voltage conversion ratio of the second power conversion circuit 350b.

The second power conversion circuit 350b may include a third switch Q3 connected in series to the primary coil L1 between the fifth terminal P5 and the sixth terminal P6, and a fourth diode D4 connected in series to the secondary coil L2 between the seventh terminal P7 the eighth terminal P8. The third switch Q3 may include a third diode D3. For example, the third switch Q3 may be a FET and may include the third diode D3 that is of a body diode type. In another example, the third switch Q3 may be another type of transistor.

The second power conversion circuit 350b may further include a third capacitor C3 between the fifth terminal P5 and the sixth terminal P6. The second power conversion circuit 350b may further include a fourth capacitor C4 between the seventh terminal P7 and the eighth terminal P8. In some embodiments, the third capacitor C3 and/or the fourth capacitor C4 may be omitted.

The second power conversion circuit 350b may convert the first battery voltage V1 between the fifth and sixth terminals P5, P6 into the third battery voltage V3 and output the third battery voltage V3 between the seventh and eighth terminals P7, P8. For example, the battery controller 360 may adjust the level of the third battery voltage V3 by controlling a duty ratio of the first switch Q1.

The second power conversion circuit 350b may convert the third battery voltage V3 between the seventh and eighth terminals P7, P8 into the first battery voltage V1 and output the first battery voltage V1 between the fifth and sixth terminals P5, P6. For example, the battery controller 360 may adjust the level of the first battery voltage V1 and the level of the third battery voltage V3 by controlling the duty ratio of the second switch Q2.

For example, the first battery rack 310 may include twelve of the first battery modules connected in series to each other, and each of the first battery modules may include twenty-two of the first battery cells connected in series to each other. The cell capacity of each of the first battery cells may be 94 Ah. The battery capacity of the first battery rack 310 may be 91.3 kWh. The first battery voltage V1 of the first battery rack 310 may be, for example, about 818.4 V to about 1095.6 V depending on the state of charge of the first battery rack 310.

The second battery rack 320 may include ten of the second battery modules connected in series to each other, and each of the second battery modules may include forty-four of the second battery cells connected in series and parallel to each other. The cell capacity of each of the second battery cells may be 150 Ah. The battery capacity of the second battery rack 320 may be 242.9 kWh. The second battery voltage V2 of the second battery rack 320 may be, for example, about 683 V to about 913 V depending on the state of charge of the second battery rack 320.

The battery module 340 may include forty-four of the third battery cells connected in series and parallel to each other. The cell capacity of each of the third battery cells may be 150 Ah. The battery capacity of the battery module 340 may be 24.3 kWh. The third battery voltage V3 of the battery module 340 may be, for example, about 68.2 V to about 91.3 V depending on the state of charge of the battery module 340. The third battery cells and the second battery cells may be of the same type. The battery module 340 may include a plurality of battery modules connected in series and/or parallel to each other.

The second conversion voltage V4 of the first power conversion circuit 330b may be about 136.4 V to about 182.6 V depending on the first battery voltage V1 and the second battery voltage V2. The first power conversion circuit 330b may output the second conversion voltage V4 such that the ratio of the first conversion voltage V3 and the second conversion voltage V4 may be 1:2. The boost ratio of the first power conversion circuit 330b may be about 1:2 and may be controlled by the battery controller 360 according to a first battery current i2 and a second battery current i2. For example, the first power conversion circuit 330b may have a power conversion capacity of about 14 kW.

The second power conversion circuit 350b may convert the first battery voltage V1 into the third battery voltage V3. The buck ratio of the first power conversion circuit 330b may be about 12:1, and the buck ratio of the second power conversion circuit 350b may be adjusted by the battery controller 360 according to a third state of charge of the battery module 340. For example, the second power conversion circuit 350b may have a power conversion capacity of about 550W.

Embodiments described herein with reference to the accompanying drawings are for illustrative purposes only and do not limit the scope of the present disclosure in any way. For simplicity of description, other functional aspects of conventional electronic configurations, control systems, software, and systems may be omitted. Furthermore, line connections or connection members between elements depicted in the drawings represent functional connections and/or physical or circuit connections by way of example, and in actual applications, they may be replaced or embodied as various additional functional connections, physical connections, or circuit connections.

In the descriptions of embodiments (particularly, in the claims), an element referred to with the definite article or a demonstrative determiner may be construed as the element or the elements even though it has a singular form. For example, unless otherwise defined, the ranges defined herein are intended to include any embodiment to which values within the ranges are individually applied and may be considered to be the same as individual values constituting the ranges in the detailed description. Operations constituting a method of the present disclosure may be performed in appropriate order unless explicitly described in terms of order or described to the contrary. The present disclosure may be not necessarily limited to the order of operations given in the description.

The examples or terms such as for example, etc. used herein are to merely describe embodiments in detail and not intended to limit the present disclosure unless defined by the following claims. For example, those skilled in the art will readily appreciate that many alternations, combinations, and modifications may be made according to design conditions and factors within the scope of the appended claims and their equivalents.

Embodiments described herein are merely examples, and even if specific terms are used herein, the specific terms should be considered in general and descriptive sense only and not for purposes of limitation. Those of skill in the art at the time of filing of the present application may apparently understand that features and/or elements described in relation to specific embodiments may be used alone or in conjunction with features and/or elements described in relation to other embodiments unless specifically stated otherwise. Thus, the scope of the present disclosure may be not limited to the embodiments but should be defined by the appended claims and equivalents thereof.

According to the present disclosure, it is possible to provide a battery pack in which a plurality of battery racks are connected in parallel to each other using a low-capacity power conversion circuit. The low-capacity power conversion circuit may be inexpensive and may generate a relatively small amount of heat during a power conversion operation. Heat generated from the low-capacity power conversion circuit may be reduced and as such heat may have a small influence on battery cells, and thus, the low-capacity power conversion circuit and the battery cells may be disposed in the same space.

The capacities and output voltage ranges of the battery racks connected in series to the low-capacity power conversion circuit may be freely adjusted, thereby increasing the usability of the battery pack. For example, the number of battery modules included in each of the battery racks may not be limited.

However, effects of the present disclosure are not limited thereto, and other effects of the present disclosure will be apparently understood by those skilled in the art through the description above.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery pack comprising:
a first battery rack connected between a first pack terminal and a second pack terminal of the battery pack;
a first power conversion circuit comprising:
a first terminal;
a second terminal;
a third terminal; and
a fourth terminal;
a second battery rack connected between the first pack terminal and the third terminal of the first power conversion circuit; and
a battery controller,
wherein the fourth terminal is connected to the second pack terminal,
wherein the first power conversion circuit is configured to bidirectionally convert a first conversion voltage between the first terminal and the second terminal into a second conversion voltage between the third terminal and the fourth terminal, and
wherein the battery controller is configured to control the first power conversion circuit to adjust a level of the second conversion voltage.

2. The battery pack as claimed in claim 1, wherein:
the second battery rack is connected between the first terminal and the second terminal of the first power conversion circuit;
the first terminal of the first power conversion circuit is connected to the first pack terminal; and
the second terminal and the third terminal of the first power conversion circuit are connected to each other.

3. The battery pack as claimed in claim 2, wherein the first power conversion circuit further comprises:
a first switch between the first terminal and a first intermediate node of the first power conversion circuit;
a second switch between the first intermediate node and the fourth terminal; and
an inductor between the first intermediate node and a second intermediate node of the first power conversion circuit that is commonly connected to the second terminal and the third terminal of the first power conversion circuit.

4. The battery pack as claimed in claim 2, wherein the first power conversion circuit further comprises:
an additive-polarity transformer comprising a primary coil connected between the first terminal and the second terminal and a secondary coil connected between the third terminal and the fourth terminal;
a first switch connected in series to the primary coil between the first terminal and the second terminal; and
a second switch connected in series to the secondary coil between the third terminal and the fourth terminal.

5. The battery pack as claimed in claim 1, wherein:
the first battery rack is connected between the first terminal and the second terminal of the first power conversion circuit;
the first terminal of the first power conversion circuit is connected to the first pack terminal; and
the second terminal and the fourth terminal of the first power conversion circuit are commonly connected to the second pack terminal,
and wherein optionally the first power conversion circuit further comprises:
a first switch between the first terminal and a first intermediate node of the first power conversion circuit;
an inductor between the first intermediate node and the third terminal; and
a second switch between the first intermediate node and a second intermediate node that is commonly connected to the second terminal and the fourth terminal.

6. The battery pack as claimed in claim 1, further comprising:
a battery module connected between the first terminal and the second terminal of the first power conversion circuit; and
a second power conversion circuit comprising a fifth terminal connected to the first pack terminal, a sixth terminal connected to the second pack terminal, a seventh terminal, and an eighth terminal, the second power conversion circuit being configured to bidirectionally convert a first battery voltage of the first battery rack connected between the fifth terminal and the sixth terminal into a third battery voltage of the battery module connected between the seventh terminal and the eighth terminal,
and wherein optionally the battery controller is further configured to detect a third state of charge of the battery module and control the second power conversion circuit based on the third state of charge.

7. The battery pack as claimed in claim 6, wherein the first power conversion circuit further comprises:
a first switch between the first terminal and a first intermediate node;
a second switch between the first intermediate node and the fourth terminal; and
an inductor between the first intermediate node and a second intermediate node that is commonly connected to the second terminal and the third terminal.

8. The battery pack as claimed in claim 6, wherein the second power conversion circuit further comprises:
an additive-polarity transformer comprising a primary coil connected between the fifth terminal and the sixth terminal and a secondary coil connected between the seventh terminal and the eighth terminal;
a third switch connected in series to the primary coil between the fifth terminal and the sixth terminal; and
a fourth switch connected in series to the secondary coil between the seventh terminal and the eighth terminal.

9. The battery pack as claimed in claim 6, wherein the first power conversion circuit further comprises:
an inductor between the first terminal and a first intermediate node;
a first switch between the first intermediate node and the third terminal; and
a second switch between the first intermediate node and a second intermediate node that is commonly connected to the second terminal and the fourth terminal.

10. The battery pack as claimed in claim 6, wherein the second power conversion circuit further comprises:
an additive-polarity transformer comprising a primary coil connected between the fifth terminal and the sixth terminal and a secondary coil connected between the seventh terminal and the eighth terminal;
a third switch connected in series to the primary coil between the fifth terminal and the sixth terminal; and
a diode connected in reverse bias in series to the secondary coil between the seventh terminal and the eighth terminal.

11. The battery pack as claimed in any preceding claim, wherein the battery controller is further configured to detect a first state of charge of the first battery rack and a second state of charge of the second battery rack and adjust the level of the second conversion voltage based on a difference between the first state of charge and the second state of charge,
and wherein optionally the battery controller is further configured to, if the second state of charge is less than the first state of charge in a charge mode, decrease a level of the second conversion voltage to increase a charge current of the second battery rack; and
the battery controller is further configured to, if the second state of charge is less than the first state of charge in a discharge mode, decrease the level of the second conversion voltage to decrease a discharge current of the second battery rack.

12. The battery pack as claimed in any preceding claim, wherein the battery controller is further configured to:
detect a first battery current capacity of the first battery rack and a second battery current capacity of the second battery rack
detect a first battery current flowing through the first battery rack and a second battery current flowing through the second battery rack; and
adjust a level of the second conversion voltage such that a ratio of the second battery current to the first battery current is equal to a ratio of the second battery current capacity to the first battery current capacity.

13. A battery pack comprising:
a first battery rack connected between a first pack terminal and a second pack terminal of the battery pack;
a first power conversion circuit comprising:
a first terminal;
a second terminal;
a third terminal;
a fourth terminal;
a second battery rack connected between the first pack terminal and the third terminal of the first power conversion circuit; and
a battery controller,
wherein the first battery rack has a first battery voltage,
wherein the second battery rack has a second battery voltage,
wherein the first power conversion circuit comprises a capacitor between the third terminal and the fourth terminal, wherein the first power conversion circuit is configured to bidirectionally convert a first conversion voltage between the first terminal and the second terminal into a second conversion voltage between both ends of the capacitor,
wherein the battery controller is configured to control the first power conversion circuit to adjust a level of the second conversion voltage of the first power conversion circuit, and
wherein the second battery rack and the capacitor of the first power conversion circuit are connected in series to each other between the first pack terminal and the second pack terminal.

14. The battery pack as claimed in claim 13, wherein at least one of:
the second battery rack is connected between the first terminal and the second terminal of the first power conversion circuit;
the first battery rack is connected between the first terminal and the second terminal of the first power conversion circuit; and
the battery controller is further configured to detect a first battery current flowing through the first battery rack and a second battery current flowing through the second battery rack and adjust a level of the second conversion voltage based on a ratio of the second battery current to the first battery current and a ratio of a second battery capacity of the second battery rack to a first battery capacity of the first battery rack.

15. The battery pack as claimed in claim 13 or 14, further comprising:
a battery module connected between the first terminal and the second terminal of the first power conversion circuit and having a third battery voltage; and
a second power conversion circuit comprising a fifth terminal connected to the first pack terminal, a sixth terminal connected to the second pack terminal, a seventh terminal connected to the first terminal, and an eighth terminal connected to the second terminal, the second power conversion circuit being configured to bidirectionally convert the first battery voltage between the fifth terminal and the sixth terminal into the third battery voltage between the seventh terminal and the eighth terminal.
